# FASCICULE DE BREVET EUROPEEN

(11) **EP 4 416 397 B1**
(45) Date de publication et mention de la délivrance du brevet: **24.12.2025**
(21) Numéro de dépôt: 22802669.6
(22) Date de dépôt: 10.10.2022
(51) Int. Cl.: F16B 37/04

(54) **DISPOSITIF DE FIXATION**
BEFESTIGUNGSVORRICHTUNG
FASTENING DEVICE

(30) Priorité: 12.10.2021 FR 2110773
(43) Date de publication de la demande: 21.08.2024
(73) Titulaire: A. Raymond & Cie, 38019 Grenoble Cedex 1 (FR)
(72) Inventeur: GARNIER, Alexis, 38450 Vif (FR); ALBARAN, Jean-Francois, 38760 Varces Allières et Risset (FR)
(74) Mandataire: Santarelli
(86) Numéro de dépôt international: PCT/FR2022/051905
(87) Numéro de publication internationale: WO 2023/062310

(56) Documents cités:
- DE-A1- 3 212 160
- DE-U1- 202009 011 986
- US-A1- 2018 058 493
- US-B2- 8 899 894

## Description

### Domaine technique de l'invention

La présente invention concerne un dispositif de fixation, notamment une agrafe destinée à être pré-embarquée sur un support pourvu d'un alésage. Par exemple, un boitier électrique peut être fixé à la structure d'un véhicule électrique au moyen d'un dispositif de la présente invention.

### Technique antérieure

On connaît de l'état de la technique une agrafe présentant la forme de pince.

Ce système de pince peut être utilisé par exemple pour fixer une pièce sur une structure. Néanmoins, il existe des risques d'ouverture lors de l'introduction du goujon dans l'agrafe sous forme de pince, donc perte de la tension d'assemblage. Un autre problème est que cette agrafe exige un effort dans l'axe du goujon pour garantir le clippage et pas de rattrapage de jeu possible. DE202009011986U1 divulgue un dispositif de fixation connu.

### Exposé de l'invention

La présente invention vise à remédier à ces inconvénients, en proposant une agrafe qui permet d'être pré-embarquée aux composants tels qu'un boîtier électrique tout en garantissant un simple montage et/ou démontage des composants sur un véhicule.

À cet effet, la présente invention concerne un dispositif de fixation et concerne également un ensemble comportant un dispositif de fixation selon la présente invention. Dans la présente invention, un dispositif de fixation est interchangeablement appelé une agrafe ou encore une agrafe de fixation.

Selon un aspect de l'invention, le dispositif de fixation présente les caractéristiques suivantes :
le dispositif de fixation destiné à être monté sur un support pourvu d'un alésage comprend un corps qui présente une ouverture dans le sens axial du corps ; ladite ouverture est apte à recevoir un goujon ;
le dispositif de fixation comporte une pluralité d'ancres qui peuvent être rétractées dans le sens radial du corps, les ancres comportent des protubérances sur la paroi interne du corps, les ancres peuvent servir de clips de maintien sur goujon, et les ancres font saillie hors la paroi externe du corps ;
les ancres sont agencées de sorte que les clips de maintien donnent un clippage en fond de filet du goujon lorsque les ancres travaillent en flexion et laissent le passage au goujon et de sorte que les ancres bloquent le déplacement des clips de maintien pour venir en opposition par rapport à l'axe du goujon, lorsque les ancres ayant un profil adapté travaillent en compression ;
le dispositif de fixation comporte un premier parapluie qui est séparé des ancres par une distance dans le sens axial du corps.

Avantageusement, les ancres présentent un profil adapté, de sorte que, lors de l'arrachement de l'agrafe du goujon, la partie inférieure de l'ancre va rentrer en contact avec le support pour travailler en compression. Par exemple, les ancres présentent une surface inférieure essentiellement perpendiculaire à l'axe du corps. Avantageusement Les ancres qui s'appuient sur le support vont bloquer le déplacement des clips de maintien pour venir en opposition par rapport à l'axe du goujon. Ceci permet d'avoir une fixation qui résiste à l'arrachement. Encore avantageusement, le profil des ancres est agencé de sorte que les ancres puissent être introduites par la partie supérieure dans l'alésage du support.

Lorsqu'on monte l'agrafe sur une structure par le dessous, les ancres sont repoussées vers l'ouverture par la paroi latérale de l'alésage et reviennent dans l'état libre, ceci donnant avantageusement une sensation de clippage.

Avantageusement, il suffit d'appuyer le support pourvu d'un alésage pour monter l'agrafe sur le support par l'alésage.

Dans un mode de réalisation, le premier parapluie est susceptible d'être compressé par un support pourvu d'un alésage sur lequel le dispositif de fixation est monté par l'alésage, et le support se situe entre les ancres et le premier parapluie.

Avantageusement, le fait que le premier parapluie est susceptible d'être compressé par un support situé au-dessus permet de laisser libre le déplacement de l'ancre.

Lors du montage du dispositif sur le goujon, la compression du premier parapluie permet de créer un jeu entre l'ancre et le support. Les ancres peuvent donc travailler en flexion et laisser le passage au goujon, ceci permettant d'avoir un clippage en fond de filet du goujon.

En outre, ceci permet une mise en tension de l'agrafe sur le support, lorsque l'agrafe est montée sur le support.

Avantageusement, une plage d'épaisseur du support est admissible grâce au premier parapluie qui est susceptible d'être pressé par le support, tout en garantissant la mise en tension de l'agrafe sur le support.

Dans un mode de réalisation, le dispositif de fixation comporte un deuxième parapluie à une extrémité du corps, le premier parapluie étant entre le deuxième parapluie et les ancres.

Avantageusement, le deuxième parapluie peut venir en contact sur la collerette large du goujon accueilli dans le dispositif de fixation ou sur un autre élément rigide structure et ceci permet une mise en tension entre le dispositif de fixation et le goujon jusqu'à la butée.

Dans un mode de réalisation, le dispositif de fixation comporte un cône de centrage, à une extrémité du corps, et le premier parapluie se situe entre le cône de centrage et les ancres.

Avantageusement, le cône de centrage permet de centrer l'agrafe sur le goujon, d'où l'agrafe peut se déplacer sur le support.

Dans un mode de réalisation, le dispositif de fixation comporte une interface de démontage à l'extrémité du corps opposée du deuxième parapluie.

Avantageusement, la présence d'une interface de démontage permet d'un démontage par vissage par le dessus du support.

Dans un mode de réalisation, l'interface de démontage est une clé à 6 pans. Ou autre

Selon un autre aspect de l'invention, l'ensemble de fixation comporte un dispositif de fixation selon la présente invention et un support pourvu d'un alésage dimensionné, d'où le dispositif de fixation est pré-embarqué sur le support par l'alésage.

Avantageusement, le support pré-embarqué d'un dispositif de fixation selon l'invention permet de monter le support sur goujon pour appliquer un effort sur le support.

Dans un mode de réalisation, l'alésage présente une forme ronde.

Avantageusement, cette forme ronde permet une fixation fixe de l'agrafe sur le support.

Dans un mode de réalisation, l'alésage présente une forme oblongue.

Avantageusement, cette forme oblongue permet une fixation mobile de l'agrafe sur le support. Avantageusement, aucun indexage se présente lors du montage de l'agrafe sur le support ayant un alésage oblong lorsque l'agrafe présente un certain nombre d'ancres.

De manière générale, l'agrafe de fixation selon la présente invention comprend essentiellement un corps de forme cylindrique qui est habituellement composé de matériaux élastiques et donc capable d'être déformé et rétractile pour le montage et le démontage.

### Brève description des figures

D'autres avantages, buts et caractéristiques de la présente invention ressortent de la description qui suit faite, dans un but explicatif et nullement limitatif, en regard des dessins annexés, dans lesquels :
la Figure 1A représente une vue en perspective d'une agrafe selon un mode de réalisation ;
la Figure 1B représente une autre vue en perspective d'une agrafe selon un mode de réalisation ;
la Figure 2 représente une vue de dessus d'une agrafe selon un mode de réalisation ;
la Figure 3 représente une vue de coupe suivant la coupe BB sur la Figure 2
la Figure 4 représente une vue en perspective d'un boitier électrique et une agrafe ;
la Figure 5A illustre une vue en perspective de l'agrafe montée sur le boitier électrique de la Figure 4 ;
la Figure 5B illustre une autre vue en perspective de l'ensemble de la Figure 5A ;
la Figure 5C représente une vue de coupe partielle suivant la coupe CC sur la Figure 5B ;
la Figure 6A illustre une vue de l'alésage de forme ronde d'un support;
la Figure 6B illustre une vue de dessous de l'agrafe montée sur un support de Figure 6A;
la Figure 6C illustre une vue de l'alésage de forme oblongue d'un support;
la Figure 6D illustre une vue de dessous de l'agrafe montée sur un support de Figure 6C;
la Figure 7 illustre une vue en perspective d'un boitier électrique ayant deux agrafes pré-embarquées qui sont prêtes à recevoir des goujons ;
la Figure 8A illustre une vue en détail de la partie F sur la Figure 7 ;
la Figure 8B illustre une vue de dessus de la partie E sur la Figure 7 ;
la Figure 8C illustre une vue de dessus de la partie F sur la Figure 7 ;
la Figure 9 illustre une vue de coupe d'une agrafe pré-embarquée recevant un goujon, d'où l'agrafe est centrée sur le goujon et le goujon est en contact sur les clips de maintien;
la Figure 10A illustre une vue en perspective d'une agrafe pré-embarquée recevant un goujon, d'où le goujon est introduit intégralement dans l'agrafe ;
la Figure 10B illustre une vue de coupe suivant la coupe DD sur la Figure 10A ;
la Figure 11A illustre une vue de coupe d'une agrafe pré-embarquée sur un support recevant un goujon, d'où le goujon est en train d'être introduit dans l'agrafe ;
la Figure 11B illustre une vue de coupe d'une agrafe pré-embarquée sur un support recevant un goujon, d'où l'agrafe est en train d'être arrachée du goujon.

### Description des modes de réalisation

Les différentes figures ainsi que les éléments d'une même figure ne sont pas nécessairement représentées à la même échelle. Sur l'ensemble des figures, les éléments identiques portent la même référence numérique.

La terminologie employée dans la présente description ne doit en aucun cas être interprétée de manière limitative ou restrictive, simplement parce qu'elle est employée en conjonction avec une description détaillée de certains modes de réalisation de l'invention.

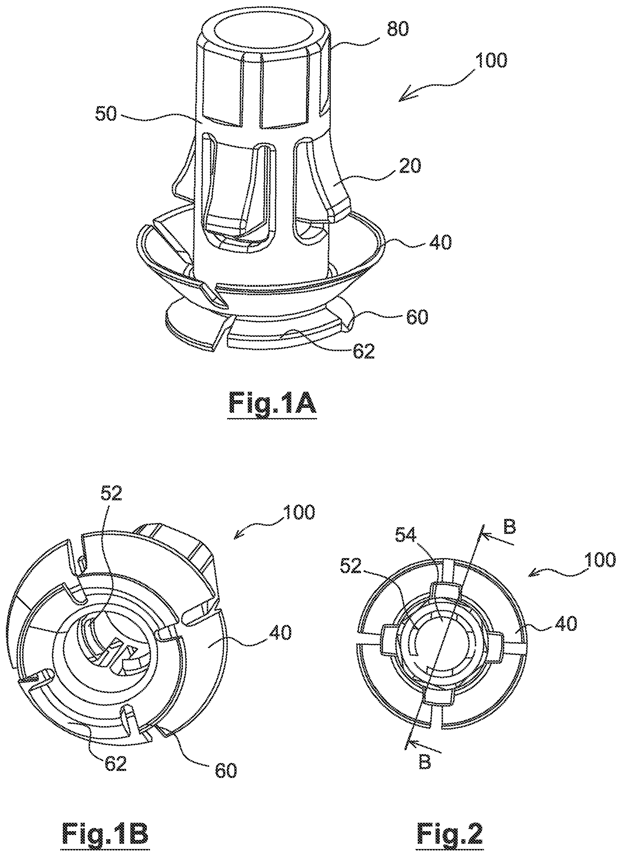

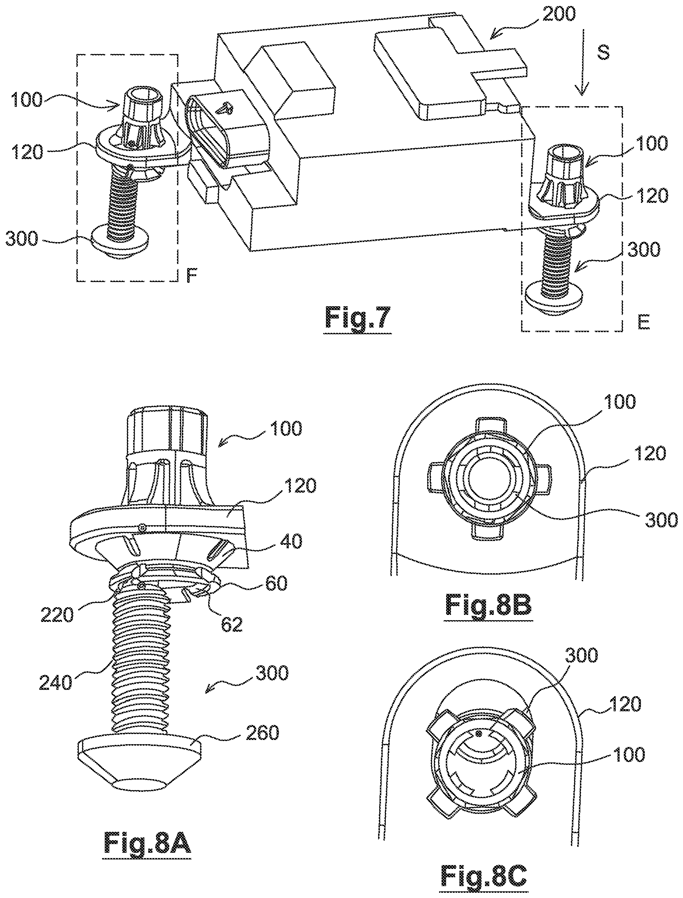

La Figure 1A montre une vue en perspective d'une agrafe 100 selon l'invention constituée essentielle d'un corps 50, de préférence de forme cylindrique, qui présente une ouverture 54 dans le sens axial du corps 50. À titre d'exemple uniquement, le dispositif de fixation 100 est destiné d'être pré-embarqué sur un support tel qu'un boîtier électrique qui est à fixer sur un véhicule au moyen des goujons, comme illustré sur la Figure 7 qui sera détaillée plus loin.

L'agrafe 100 selon l'invention peut être fabriquée par moulage de matière plastique connue, par exemple par injection thermoplastique, plus particulièrement en plastiques techniques tels que des polyamides, des résines d'acétal, des polyesters thermoplastiques. De préférence, l'agrafe 100 est de matériaux connus permettant de résister au vieillissement et à la température. Avantageusement, l'agrafe 100 est fabriquée au moyen d'un démoulage naturel et/ou d'un démoulage avec un chariot. Le démoulage principal de l'agrafe 100 peut être réalisé axialement, avec des mouvements de chariot suivant une direction transversale.

Le dispositif de fixation 100 comporte une pluralité d'ancres 20 qui peuvent être rétractées dans le sens radial du corps 50. Les ancres 20 font saillie hors la paroi externe du corps 50 et comportent sur la paroi interne du corps 50, des protubérances 52 servant de clips de maintien 52 sur un goujon qui est introduit dans l'agrafe 100.

Les ancres 20 sont capables de travailler en flexion et en compression.

Lorsque les ancres 20 travaillent en flexion, ils laissent le passage au goujon 300, et les clips de maintien 52 donnent un clippage en fond de filet du goujon 300 ; lorsque les ancres 20 travaillent en compression, les ancres 20 dont les parties inférieures s'appuient sur le support bloquent le déplacement des clips de maintien 52 pour venir en opposition par rapport à l'axe du goujon 300, empêchant ainsi un mouvement relatif entre l'agrafe 100 et le goujon 300.

Le dispositif de fixation 100 comporte un premier parapluie 40 qui est séparé des ancres 20 par une distance dans le sens axial du corps 50. Cette distance correspond avantageusement à l'épaisseur du support sur lequel l'agrafe 100 est montée.

Dans un mode de réalisation, le premier parapluie 40 est susceptible d'être compressé par le support pourvu d'un alésage, l'agrafe 100 étant montée sur ce support par l'alésage avec le support entre les ancres 20 et le premier parapluie 40. Avantageusement, l'agrafe 100 s'adapte aux supports de différentes épaisseurs, c'est-à-dire, une plage d'épaisseur du support 120 est admissible grâce au premier parapluie 40 qui peut être pressé par le support 120.

Dans un mode de réalisation, l'agrafe 100 selon l'invention présente un deuxième parapluie 60 à une extrémité du corps 50, le premier parapluie 40 étant entre le deuxième parapluie 60 et les ancres 20. Lorsqu'un goujon est reçu par l'agrafe 100 dans son extrémité du deuxième parapluie 60, le deuxième parapluie peut avantageusement venir en contact sur la collerette large du goujon accueilli 300 dans l'agrafe et ceci permet une mise en tension entre la collerette et le deuxième parapluie 60 jusqu'à la butée. De plus, ceci constitue un témoin de bon montage, qui peut être observé par un opérateur.

Dans un mode de réalisation, l'agrafe 100 comporte un cône de centrage 62 à proximité du deuxième parapluie 60.

Avantageusement, le cône de centrage 62 permet de centrer l'agrafe sur le goujon. Cet aspect sera décrit davantage plus loin à l'aide de la Figure 8A.

Dans un mode de réalisation, l'agrafe 100 comporte une interface de démontage 80 à l'extrémité du corps 50 opposée du deuxième parapluie 60.

La Figure 1B illustre une autre vue en perspective d'une agrafe selon un mode de réalisation.

Dans ce mode de réalisation illustré, le cône de centrage 62 et le deuxième parapluie 60 sont placés alternativement.

Lorsqu'un goujon 300, qui est souvent fixé préalablement sur une structure, est introduit dans l'agrafe 100 par l'extrémité du deuxième parapluie 60, le cône 62 permet d'avoir un centrage de l'agrafe 100 sur le goujon 300, facilitant ainsi l'introduction.

La Figure 2 illustre une vue de dessous d'une agrafe selon un mode de réalisation.

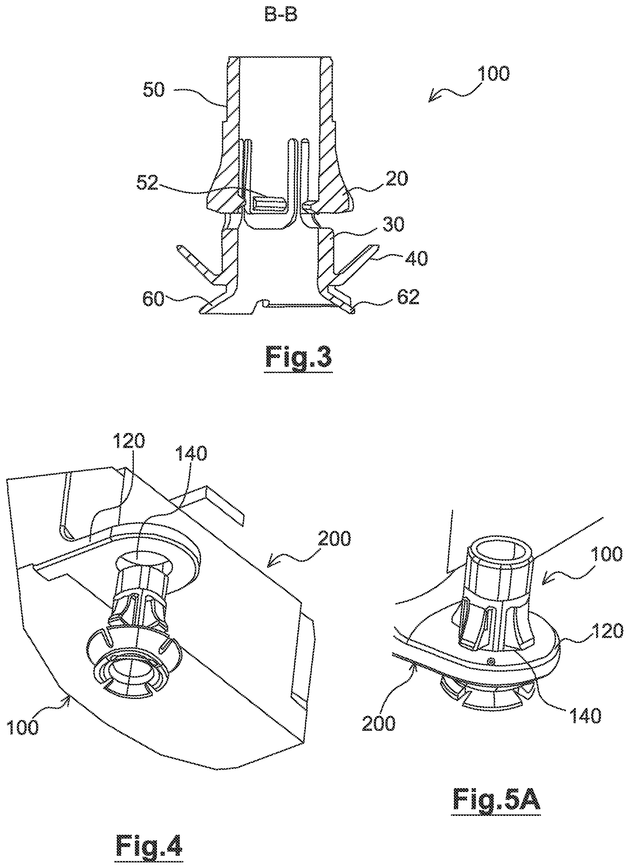

En se référant à la Figure 3 qui illustre une vue de coupe suivant la coupe BB sur la Figure 2, l'agrafe 100 comporte une portion de centrage 30 entre les ancres 20 et le premier parapluie 40. Lorsque l'agrafe est pré-embarquée sur un support, par exemple une pièce à fixer, la portion 30 permet avantageusement un centrage de l'agrafe 100 sur la pièce.

La Figure 4 illustre une vue en perspective de la pièce à fixer qui est un boitier électrique et une agrafe, avant que l'agrafe 100 soit montée sur la pièce à fixer 200.

Le boitier électrique 200 est pourvu d'un support 120 latéral comportant un alésage 140 par lequel l'agrafe 100 est introduite. Avantageusement, l'agrafe 100 est introduite dans l'alésage 140 par son extrémité de l'interface de démontage 80 qui peut se présenter sous forme d'une clé à 6 pans. Lorsqu'on monte une agrafe 100 dans la pièce à fixer 200 par le dessous, les ancres 20 sont repoussées vers l'axe du corps 50 par la paroi latérale de l'alésage 140 et ensuite se remettent en place, donnant une sensation de clippage. Comme mentionné précédemment, une plage d'épaisseur du support 120 est admissible grâce au premier parapluie 40 qui peut être pressé par le support 120.

Avantageusement, la compression du premier parapluie 40 par le support 120 permet une mise en tension de l'agrafe 100 sur la pièce à fixer 200.

La Figure 5A représente une vue en perspective de l'agrafe 100 montée sur la pièce à fixer 200 de la Figure 4. Lorsqu'elle est pré-embarquée sur un support, l'agrafe 100 est suspendue sur le support 200, avec les ancres 20 servant d'interface avec la pièce à fixer.

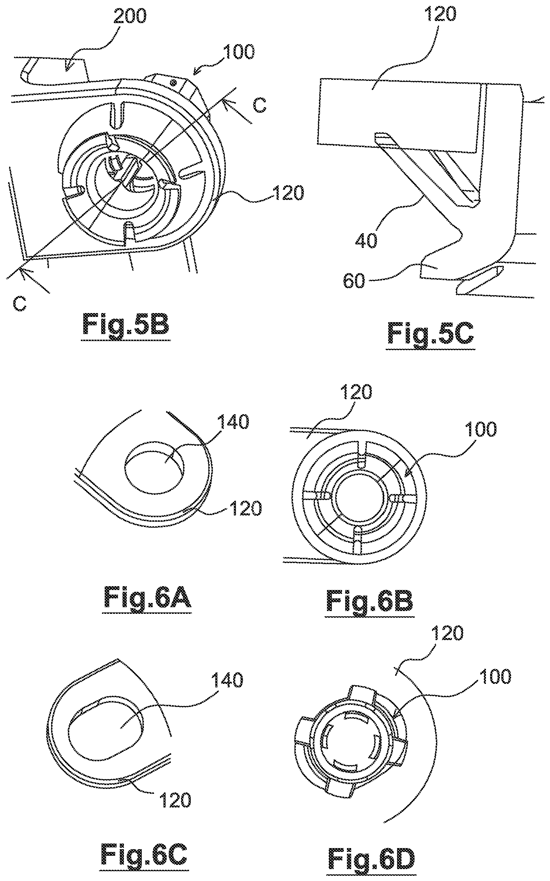

La Figure 5B représente une autre vue en perspective de l'ensemble de la Figure 5A. On constate que le premier parapluie 40 s'appuie contre la surface inférieure du support 120.

La Figure 5C illustre une vue de coupe partielle suivant la coupe CC sur la Figure 5B. On constate la compression du premier parapluie 40 par le support 120.

La Figure 6A illustre une vue de l'alésage 140 de forme ronde d'un support 120. Avantageusement, la forme ronde permet une fixation fixe de l'agrafe 100 dans l'alésage 140. La Figure 6B illustre une vue de dessous de l'agrafe 100 montée sur le support 120 de Figure 6A.

La Figure 6C illustre une vue de l'alésage 140 de forme oblongue d'un support 120. Avantageusement, la forme oblongue permet une fixation mobile de l'agrafe 100 dans l'alésage 140. Plus avantageusement, aucun indexage se présente lors du montage de l'agrafe 100 sur le support 120. La fixation mobile de l'agrafe 100 permet un rattrapage de jeu possible, lors de l'assemblage de l'ensemble de la pièce à fixer pré-embarqué des agrafes sur les goujons dans l'axe de l'oblong. Un autre avantage est l'absence de risque de perte possible lors du conditionnement, notamment avec le choix de 4 ancres. La Figure 6D illustre une vue de dessous de l'agrafe 100 montée sur le support 120 de Figure 6C. Les 4 ancres réparties sur le corps de l'agrafe permettent avantageusement d'insérer l'agrafe 100 dans un sens quelconque dans l'alésage 140.

La Figure 7 représente une vue en perspective de la pièce à fixer 200 ayant deux agrafes 100 qui sont prêtes à recevoir des goujons 300.

Les goujons 300 sont fixés préalablement sur une structure, par exemple le véhicule. Pour monter la pièce à fixer sur un véhicule, il suffira d'appuyer la pièce à fixer dans le sens S indiqué dans la Figure 7. Dans le mode de réalisation illustré, la pièce à fixer 200 est pourvue d'un alésage de forme ronde et un autre de forme oblongue....

Pour la fixation fixe de l'agrafe, il suffit d'aligner l'agrafe 100 dans l'axe du goujon avant d'appuyer la pièce à fixer vers le goujon.

La Figure 8A représente une vue en détail de la partie F sur la Figure 7, où l'alésage présente une forme d'un oblong. Le centrage de l'agrafe 100 sur le goujon peut se faire avec un effort de montage nul, grâce à la présence du cône de centrage 62.

Pour la fixation mobile de l'agrafe, le cône de centrage permet de centrer l'agrafe 100 sur le goujon 300, avec le déplacement de l'agrafe 100 dans l'oblong. Le déplacement de l'agrafe 100 dépend de sa position initiale sur le support 120.

Les Figures 8B et 8C illustre respectivement une vue de dessus de la partie E et F sur la Figure 7.

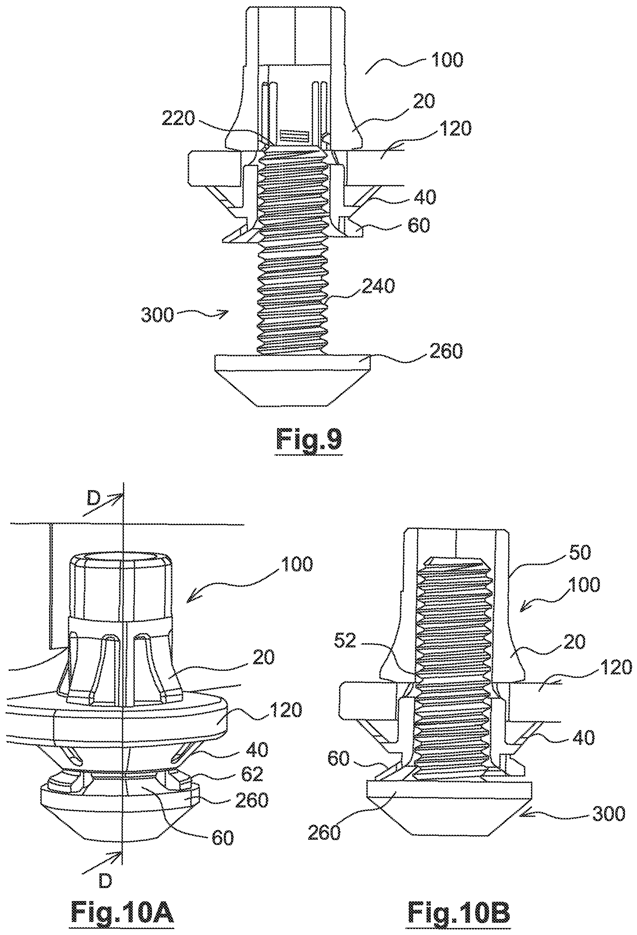

La Figure 9 représente une vue de coupe de l'agrafe 100 pré-embarquée recevant le goujon 300, d'où la portion de l'agrafe est centrée sur le goujon et l'extrémité libre du goujon entre en contact avec les clips de maintien 52. Sans un effort d'appui suffisamment important, les ancres 20 sont bloquées dans toutes les directions. Avantageusement, les ancres 20 viennent bloquer le passage du goujon 300.

Si on continue à appliquer un effort suffisamment important, on vient comprimer le premier parapluie 40 et laisser libre le déplacement de l'ancre 20. L'opérateur passe le point critique et atteint l'effort maximum de montage. On pousse dans l'axe de l'agrafe 100 et aucun risque de perte de l'agrafe 100 ne se présente. Parallèlement, les clips de maintien 52 viennent en fond de filet du goujon, donnant ainsi une sensation de clippage. Dans un mode de réalisation, les clips de maintien 52 présentent des pentes qui permettent de venir en fond de filet du goujon et bloquer ainsi le déplacement du goujon.

La Figure 10B représente une vue de coupe suivant la coupe DD sur la Figure 10A.

Dans la dernière étape de montage sur le goujon, le parapluie vient en contact sur la collerette large 260 du goujon 300, ceci permettant avantageusement une mise en tension jusqu'à la butée. Les ancres 20 se remettent en place pour le verrouillage du système.

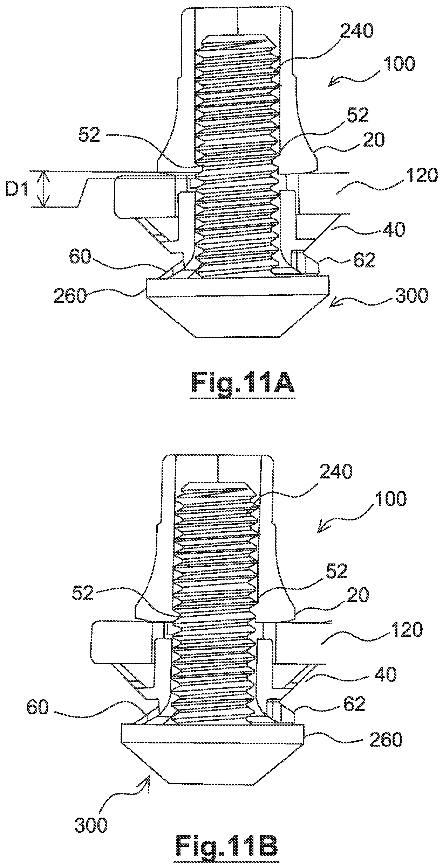

La Figure 11A représente une vue de coupe d'une agrafe pré-embarquée recevant un goujon 300 qui est en train d'être introduit dans l'agrafe 100. Lors de ce montage, la compression du premier parapluie 40 permet de créer un jeu D1 entre l'ancre 20 et le support 120. Les ancres 20 peuvent donc travailler en flexion et laisser le passage au goujon 300, ceci permettant d'avoir un clippage en fond de filet du goujon. Dans un mode de réalisation préféré, l'agrafe 100 comporte 4 clips de maintien orientés suivant ¼ de pas sur la paroi intérieure du corps 50.

La Figure 11B montre une vue de coupe d'une agrafe pré-embarquée recevant un goujon, d'où l'agrafe est en train d'être arraché du goujon.

Lors de l'arrachement, l'ancre 20 rentre en contact avec le support 120 pour travailler en compression. Les ancres bloquent donc le déplacement des clips de maintien 52 pour venir en opposition par rapport à l'axe de goujon, ceci permettant ainsi de bloquer l'arrachement.

Il est possible de démonter l'agrafe 100 du goujon 300 par vissage par le dessus du support, à l'aide d'un outil appliqué à l'interface de démontage 80 qui peut se présenter sous forme d'une clé à 6 pans ou autre.

### LISTE DES SIGNES DE RÉFÉRENCE

**[Tableaux 1]**

| Références | Désignations |
|---|---|
| 100 | Dispositif de fixation / clip / agrafe |
| 20 | Ancre |
| 30 | Portion de centrage |
| 40 | Premier parapluie |
| 50 | Corps |
| 52 | Cran / Protubérance |
| 54 | Ouverture |
| 60 | Deuxième parapluie |
| 62 | Cône de centrage |
| 80 | Interface de démontage |
| 200 | Boitier électrique / pièce à fixer |
| 120 | Support |
| 140 | Alésage |
| 300 | Goujon |
| 220 | Bout de goujon |
| 240 | Filetage |
| 260 | Collerette large de goujon |

## Revendications

1. Dispositif de fixation (100) destiné à être monté sur un support (120) pourvu d'un alésage (140), comprenant un corps (50) présentant une ouverture (54) dans le sens axial, ladite ouverture (54) étant apte à recevoir un goujon (300),
- le dispositif de fixation (100) comporte une pluralité d'ancres (20) pouvant être rétractées dans le sens radial du corps (50), les ancres (20) comportent des clips de maintien (52) sur la paroi interne du corps (50), les ancres faisant saillie hors la paroi externe du corps (50),
- les ancres sont agencées de sorte que les clips de maintien (52) donnent un clippage en fond de filet du goujon (300) lorsque les ancres (20) travaillent en flexion et laissent le passage au goujon (300) et de sorte que les ancres (20) bloquent le déplacement des clips de maintien (52) pour venir en opposition par rapport à l'axe du goujon (300), lorsque les ancres (20) travaillent en compression,
- **caractérisé en ce que** le dispositif de fixation (100) comporte un premier parapluie (40) qui est séparé des ancres (20) par une distance dans le sens axial du corps (50).

2. Dispositif de fixation (10) selon la revendication 1, dans lequel, le premier parapluie (40) est susceptible d'être compressé par le support (120) pourvu d'un alésage (140) sur laquelle le dispositif de fixation est monté par l'alésage (140), le support étant entre les ancres (20) et le premier parapluie (40).

3. Dispositif de fixation (10) selon la revendication 1 ou 2, caractérisé ce qu'il comporte un deuxième parapluie (60) à une extrémité du corps (50), le premier parapluie (40) étant entre le deuxième parapluie (60) et les ancres (20).

4. Dispositif de fixation (10) selon l'une des revendications précédentes, caractérisé ce qu'il comporte un cône de centrage (62), à une extrémité du corps (50), le premier parapluie (40) étant entre le cône de centrage (62) et les ancres (20).

5. Dispositif de fixation (10) selon l'une des revendications précédentes, caractérisé ce qu'il comporte une interface de démontage (80) à l'extrémité du corps (50) opposée du deuxième parapluie (60).

6. Dispositif de fixation (10) selon l'une des revendications précédentes, **caractérisé en ce que** le dispositif de fixation (100) comporte 4 d'ancres (20).

7. Ensemble d'un dispositif de fixation (100) selon l'une des revendications précédentes et le support (120) pourvu d'un alésage (140) dimensionné, d'où le dispositif de fixation (100) est pré-embarqué dans le support par l'alésage (140).

8. Ensemble selon la revendication précédente, dans lequel l'alésage présente une forme ronde ou oblongue ou autre.

## Patentansprüche

1. Befestigungsvorrichtung (100), die zu der Montage an einem Träger (120) bestimmt ist, der mit einer Bohrung (140) versehen ist, umfassend einen Körper (50), der eine Öffnung (54) in axialer Richtung besitzt, wobei die Öffnung (54) dazu ausgelegt ist, einen Bolzen (300) aufzunehmen,
- die Befestigungsvorrichtung (100) eine Vielzahl von Ankern (20) aufweist, die in radialer Richtung des Körpers (50) zurückgezogen werden können, die Anker (20) Halteclips (52) an der Innenwand des Körpers (50) aufweisen, wobei die Anker aus der Außenwand des Körpers (50) herausragen,
- die Anker sind so angeordnet, dass die Halteclips (52) eine Clipsung an dem Gewindegrund des Bolzens (300) ermöglichen, wenn die Anker (20) in Biegung arbeiten und den Durchgang zu dem Bolzen (300) lassen, und dass die Anker (20) die Bewegung der Halteclips (52) blockieren, um sich in Bezug auf die Achse des Bolzens (300) in eine entgegengesetzte Richtung zu bewegen, wenn die Anker (20) unter Druck stehen,
- **dadurch gekennzeichnet, dass** die Befestigungsvorrichtung (100) einen ersten Regenschirm (40) aufweist, der von den Ankern (20) durch einen Abstand in axialer Richtung des Körpers (50) getrennt ist.

2. Befestigungsvorrichtung (10) nach Anspruch 1, wobei der erste Regenschirm (40) durch den Träger (120) mit einer Bohrung (140) zusammengedrückt werden kann, an der die Befestigungsvorrichtung durch die Bohrung (140) montiert ist, wobei der Träger zwischen den Ankern (20) und dem ersten Regenschirm (40) liegt.

3. Befestigungsvorrichtung (10) nach Anspruch 1 oder 2, **dadurch gekennzeichnet, dass** sie einen zweiten Regenschirm (60) an einem Ende des Körpers (50) aufweist, wobei der erste Regenschirm (40) zwischen dem zweiten Regenschirm (60) und den Ankern (20) liegt.

4. Befestigungsvorrichtung (10) nach einem der vorhergehenden Ansprüche, **dadurch gekennzeichnet, dass** sie einen Zentrierkegel (62) an einem Ende des Körpers (50) aufweist, wobei der erste Regenschirm (40) zwischen dem Zentrierkegel (62) und den Ankern (20) liegt.

5. Befestigungsvorrichtung (10) nach einem der vorhergehenden Ansprüche, **dadurch gekennzeichnet, dass** sie eine Demontageschnittstelle (80) an dem Ende des Körpers (50) gegenüber dem zweiten Regenschirm (60) aufweist.

6. Befestigungsvorrichtung (10) nach einem der vorhergehenden Ansprüche, **dadurch gekennzeichnet, dass** die Befestigungsvorrichtung (100) 4 Anker (20) aufweist.

7. Baugruppe aus einer Befestigungsvorrichtung (100) nach einem der vorhergehenden Ansprüche und dem Träger (120), der mit einer bemessenen Bohrung (140) versehen ist, von der aus die Befestigungsvorrichtung (100) durch die Bohrung (140) in die Halterung vorab eingebracht wird.

8. Baugruppe nach dem vorhergehenden Anspruch, wobei die Bohrung eine runde oder längliche oder andere Form besitzt.

## Claims

1. A fastening device (100) to be mounted to a support (120) provided with a bore (140), comprising a body (50) having an opening (54) in the axial direction, said opening (54) being capable of receiving a stud (300),
- the fastening device (100) comprises a plurality of anchors (20) that can be retracted in the radial direction of the body (50), the anchors (20) comprise holding clips (52) on the inner wall of the body (50), the anchors projecting out of the outer wall of the body (50),
- the anchors are arranged so that the holding clips (52) yield a bottom-of-thread clipping of the stud (300) when the anchors (20) work in flexion and leave passage to the stud (300) and so that the anchors (20) block displacement of the holding clips (52) to come into opposition with respect to the axis of the stud (300), when the anchors (20) work in compression,
- **characterised in that** the fastening device (100) comprises a first umbrella (40) which is separated from the anchors (20) by a distance in the axial direction of the body (50).

2. The fastening device (10) according to claim 1, wherein the first umbrella (40) is likely to be compressed by the support (120) provided with a bore (140) to which the fastening device is mounted by the bore (140), the support being between the anchors (20) and the first umbrella (40).

3. The fastening device (10) according to claim 1 or 2, **characterised in that** it comprises a second umbrella (60) at one end of the body (50), the first umbrella (40) being between the second umbrella (60) and the anchors (20).

4. The fastening device (10) according to one of the preceding claims, **characterised in that** it comprises a centring cone (62), at one end of the body (50), the first umbrella (40) being between the centring cone (62) and the anchors (20).

5. The fastening device (10) according to one of the preceding claims, **characterised in that** it comprises a dismounting interface (80) at the end of the body (50) opposite to the second umbrella (60).

6. The fastening device (10) according to one of the preceding claims, **characterised in that** the fastening device (100) comprises 4 anchors (20).

7. An assembly of a fastening device (100) according to one of the preceding claims and the support (120) provided with a dimensioned bore (140), from where the fastening device (100) is pre-embedded in the support by the bore (140).

8. The assembly according to the preceding claim, wherein the bore has a round or oblong or another shape.
